Europäisches Patentamt

European Patent Office

Office européen des brevets

(11) Numéro de publication : **0 448 441 A1**

# (12) DEMANDE DE BREVET EUROPEEN

(21) Numéro de dépôt : 91400643.2

(51) Int. Cl.⁵ : **C01G 23/00, C01G 29/00**

(22) Date de dépôt : 08.03.91

(30) Priorité : 14.03.90 FR 9003241

(43) Date de publication de la demande :
25.09.91 Bulletin 91/39

(84) Etats contractants désignés :
AT BE CH DE DK ES FR GB GR IT LI LU NL SE

(71) Demandeur : RHONE-POULENC CHIMIE
25, quai Paul Doumer
F-92408 Courbevoie Cédex (FR)

(72) Inventeur : **Fourre, Patrick**
31, Boulevard Clémenceau
F-92400 Courbevoie (FR)
Inventeur : **Ries, Michel**
5, allée des Noyers
F-94400 Vitry sur-Seine (FR)

(74) Mandataire : **Dubruc, Philippe et al**
RHONE-POULENC CHIMIE Service
IOM/BREVETS, 25,quai Paul Doumer
F-92408 Courbevoie (FR)

(54) Procédé de préparation d'un titanate de cation divalent ou trivalent.

(57)    L'invention concerne un procédé de préparation d'un titanate d'au moins un cation divalent ou trivalent.

Ce procédé est caractérisé en ce qu'on fait réagir au moins un sel ou hydroxyde dudit cation en milieu basique avec un sol d'oxyde de titane de structure anatase obtenu par un procédé comprenant une thermohydrolyse.

Le produit obtenu se présente sous forme de particules de taille moyenne d'au plus 0,5µm et monodisperses.

# PROCEDE DE PREPARATION D'UN TITANATE DE CATION DIVALENT OU TRIVALENT

La présente invention concerne un procédé de préparation d'un titanate de cation divalent ou trivalent.

Elle concerne plus particulièrement la préparation de titanates alcalino-terreux comme par exemple le titanate de baryum.

Ces titanates sont utilisés dans des applications électroniques pour la fabrication notamment de condensateurs ou de résistances.

Pour cette utilisation, il est nécessaire que ces produits présentent en particulier une grande pureté, une bonne frittabilité, une taille de grain faible et monodisperse. Si ces conditions ne sont pas réunies, les produits n'ont pas notamment de bonnes propriétés diélectriques et sont par conséquent inaptes aux applications mentionnées plus haut.

Plusieurs procédés de préparation de titanates ont déjà été proposés.

D'une manière conventionnelle, on procède par chamottage, c'est-à-dire en faisant réagir entre elles des poudres de $TiO_2$ et, par exemple, d'un sel de baryum, à haute température. Mais un tel procédé n'est pas satisfaisant car on obtient des produits d'une taille élevée et d'une répartition granulométrique très large en raison de la formation d'agrégats difficiles à réduire au broyage. En outre, un broyage poussé est également source d'impuretés qui peuvent nuire aux propriétés diélectriques du matériau.

Par ailleurs, à cause de la mauvaise homogénéité chimique initiale des produits de départ, il est difficile d'obtenir un contrôle précis de la stoechiométrie, ce qui a pour conséquence la présence de phases parasites. Il s'ensuit notamment des températures de frittage élevées et un mauvais contrôle de la taille des grains de titanate.

D'autres voies ont été proposées, en particulier la voie hydrothermale. Dans ce cas, on utilise comme précurseur du titane, un gel d'oxyde hydraté. Cependant, on obtient encore un produit de morphologie irrégulière et de répartition granulométrique large.

Une amélioration de la répartition granulométrique et une meilleure maitrise de la taille finale du produit peuvent tout de même être obtenues mais à condition d'effectuer la synthèse en controlant de manière très précise le débit d'introduction du cation, par exemple le baryum, dans le précurseur du titane. Toutefois, il s'agit là d'un procédé dont la mise en oeuvre est délicate et qui est limité à des concentrations relativement faibles.

Un premier objet de l'invention est en conséquence un procédé de préparation d'un titanate permettant l'obtention d'un produit à particules de taille faible, notamment submicronique, et monodisperse.

Un second objet de l'invention est un procédé de mise en oeuvre simple et, en particulier, permettant de travailler à concentration élevée en réactifs.

Dans ce but, le procédé, selon l'invention, de préparation d'un titanate d'au moins un cation divalent ou trivalent est caractérisé en ce qu'on fait réagir au moins un sel ou hydroxyde dudit cation en milieu basique avec un sol d'oxyde de titane de structure anatase obtenu par un procédé comprenant une thermohydrolyse.

Le procédé de l'invention permet notamment l'obtention de poudres très fines, c'est-à-dire de taille d'au plus 0,5μm. Ces poudres sont constituées de particules généralement sphériques, à répartition granulométrique resserée, par exemple $\varnothing$ 75 / $\varnothing$ 25 ≤ 1,5, non poreuses et facilement dispersibles.

D'autres caractéristiques, détails et avantages de l'invention apparaîtront plus clairement à la lecture de la description et des exemples non limitatifs qui vont suivre.

On notera tout d'abord que l'invention s'applique à la préparation d'un titanate d'au moins un cation divalent ou trivalent, c'est-à-dire d'un titanate pouvant contenir dans sa formule un ou plusieurs cations divalents ou trivalents, comme par exemple les mixtes titanates de baryum et de strontium. En conséquence pour tout le reste de la description, tout ce qui est dit pour un cation divalent ou trivalent doit s'entendre comme pouvant s'appliquer à plusieurs cations.

En ce qui concerne les cations divalents, on peut citer le plomb et ceux du groupe des alcalino-terreux. Parmi ces derniers, on peut mentionner plus particulièrement le baryum et le strontium.

Les cations trivalents envisageables sont par exemple ceux du groupe des terres rares comme l'yttrium, le lanthane et les éléments de la série du lanthane comme le praséodyme et le néodyme. On peut aussi mentionner comme cations trivalents le bismuth.

Les cations divalents ou trivalents peuvent d'abord être utilisés sous forme de sels.

Il peut s'agir de sels inorganiques tels que chlorures, nitrates.

On peut aussi utiliser les sels organiques tels que les acétates, citrates, oxalates, tartrates.

Les cations divalents ou trivalents sont aussi employés sous la forme d'hydroxydes.

Selon l'une des caractéristiques principales de l'invention, le cation divalent ou trivalent réagit avec un sol d'oxyde de titane de structure anatase obtenu par un procédé comprenant une thermohydrolyse.

On entend ici par sol, une dispersion colloïdale de particules d'oxyde de titane de 10 à 200 nm de diamètre, ces particules peuvent elles-mêmes être constituées de cristallites de 5 à 7 nm environ.

Il doit par ailleurs s'agir d'oxyde de titane sous forme essentiellement anatase.

D'autre pot, le sol de titane doit avoir été obtenu par un procédé qui comprend une thermohydrolyse.

Par thermohydrolyse, on entend l'opération consistant à chauffer un sel de titane en solution. On notera ici qu'il est tout à fait possible d'utiliser un sol obtenu par un procédé plus complexe, c'est-à-dire comprenant, outre la thermohydrolyse, d'autres étapes par exemple des post-traitements du sol obtenu.

En outre, il est préférable d'utiliser un sol d'oxyde de titane qui n'a pas été calciné.

Il est aussi avantageux d'utiliser un oxyde de titane exempt de soufre.

On utilise enfin de préférence un sol aqueux d'oxyde de titane.

Selon une variante particulière de l'invention, un sol du type ci-dessus peut être obtenu par thermohydrolyse d'un composé du titane dans un milieu spécifique. Ce composé sera appelé par la suite composé A.

Généralement, le composé A est choisi parmi les halogénures, oxyhalogénures, nitrates ou alcoxydes de titane.

Le milieu réactionnel où se déroule la thermohydrolyse est caractérisé en ce qu'il contient au moins un composé (composé B) choisi parmi :

(i) les acides qui présentent :
– soit un groupement carboxyle et au moins deux groupements hydroxyles et/ou amines
– soit au moins deux groupements carboxyles et au moins un groupement hydroxyle et/ou amine
(ii) les sels des acides cités sous (i).

Ce procédé d'obtention du sol de titane va être décrit plus en détail ci-dessous.

La première étape de ce procédé passe donc tout d'abord par la préparation d'une solution contenant au moins un composé A et au moins un composé B tels que précédement définis.

Cette solution initiale, destinée à être hydrolysée, est de préférence totalement aqueuse; éventuellement il pourrait y être rajouté un autre solvant, un alcool par exemple, à condition bien entendu que les composés A et B utilisés soient alors substantiellement solubles dans ce mélange.

D'autre part, il est préférable que le composé du titane A soit exempt de soufre, ce qui dans ce cas exclut l'utilisation de sels du type sulfate ou oxysulfate de titane.

De préférence, on opèrera avec des composés du titane du type halogénure ou oxyhalogénure de titane. Les halogénures ou les oxyhalogénures de titane plus particulièrement utilisables sont les fluorures, les chlorures, les bromures et les iodures (respectivement les oxyfluorures, les oxychlorures, les oxybromures et les oxyiodures) de titane.

On peut utiliser tout particulièrement l'oxychlorure de titane $TiOCl_2$.

Selon le procédé, la solution initiale doit en outre contenir au moins un composé B tel que défini précédemment, c'est-à-dire un composé B convenablement choisi dans la classe générale des acides (hydroxy et/ou amino) carboxyliques.

A titre d'exemples non limitatifs de composés B rentrant dans le cadre de la présente invention, on peut citer notamment :

– les acides hydroxypolycarboxyliques, et plus particulièrement les acides hydroxydi- ou hydroxytricarboxyliques, comme par exemple l'acide malique, l'acide citrique et l'acide tartronique,
– les acides (polyhydroxy)monocarboxyliques, comme par exemple l'acide glucoheptonique et l'acide gluconique,
– les acides poly(hydroxycarboxyliques), comme par exemple l'acide tartrique,
– les aminoacides dicarboxyliques et leurs amides correspondants, comme par exemple l'acide aspartique, l'asparagine et l'acide glutamique,
– les aminoacides monocarboxyliques, hydroxylés ou non, comme par exemple la lysine, la sérine et la thréonine.

Comme déjà indiqué, il est également possible d'utiliser à titre de composé B tous les sels des acides précités.

De préférence, ces sels seront soit des sels d'alcalins, et plus particulièrement des sels de sodium, soit des sels d'ammonium.

De préférence, les composés B tels que notamment définis ci-dessus seront des composés hydrocarbonés du type aliphatique.

De préférence enfin, la longueur de la chaîne principale hydrocarbnée n'excèdera pas 15 atomes de carbone, et plus préférentiellement 10 atomes de carbone.

La quantité de composé du titane présente dans la solution à hydrolyser est généralement telle que la concentration molaire en titane dans ladite solution soit comprise entre environ 0,1 mole/litre et 1,5 mole/litre.

Des concentrations en titane inférieures à 0,1 mole/litre nuisent simplement à l'économie et à la rentabilité du procédé.

Des concentrations en titane supérieures à 1,5 mole/litre peuvent nuire au rendement de la réaction d'hydrolyse.

Pour des concentrations en titane aux environs de, ou supérieures à 1,5 mole/litre, il peut être alors avantageux de rajouter dans la solution de l'ammoniaque $NH_4OH$ dans un rapport molaire

$$\frac{[NH_3]}{[Ti]}$$

n'excèdant pas de préférence 1,5, et ceci dans le but d'augmenter le rendement et/ou la cinétique de la réaction d'hydrolyse.

La concentration en composé B dans la solution initiale peut être comprise entre 0,002 mole/litre et 0,5 mole/litre. D'une manière générale, on constate que des concentrations relativement faibles en composé B, c'est-a-dire des concentrations comprises entre 0,002 mole/litre et 0,1 mole/litre, suffisent à obtenir le résultat recherché.

On peut se mettre plus particulièrement dans des conditions telles que le rapport molaire B/Ti soit d'au moins 1,5% plus particulièrement d'au moins 2%.

On notera enfin que selon un mode de réalisation particulier de l'invention, la solution initiale peut éventuellement contenir en outre des germes d'anatase. La quantité de germes peut varier entre 0,1 et 2% en poids, par rapport au $TiO_2$ total. La présence de ces germes permet d'accélerer la vitesse d'hydrolyse et de mieux contrôler la taille des particules du sol.

La solution initiale ainsi obtenue est alors hydrolysée.

Cette hydrolyse est de préférence menée à une température supérieure ou égale à 60°C. Des températures inférieures peuvent bien entendu être utilisées, mais dans ce cas la réaction d'hydrolyse est beaucoup plus longue, ce qui nuit évidemment à l'économie du procédé.

A l'issue de la réaction, on récupère le solide formé, notamment par filtration.

Le solide ainsi récupéré peut alors être lavé, à l'eau par exemple, pour éliminer les éventuelles impuretés restantes, puis séché.

L'analyse par diffraction X montre que le produit ainsi obtenu est de l'oxyde de titane $TiO_2$ présent essentiellement ou uniquement sous sa forme cristalline anatase.

Comme on l'a vu plus haut, le procédé de l'invention comprend une réaction d'un cation divalent ou trivalent avec un sol tel que décrit précédemment ou du type obtenu par le procédé qui vient d'être étudié ci-dessus.

Cette réaction se fait généralement à une température d'au moins 50°C plus particulièrement d'au moins 70°C.

Habituellement, on ne dépasse pas la température de 200°C.

On peut ainsi travailler entre 70 et 180°C, par exemple et plus particulièrement entre 70 et 120°C.

Il peut être nécessaire, pour les températures supérieures à 100°C d'effectuer la réaction dans un autoclave.

On notera ici qu'un des avantages du procédé de l'invention est de travailler à des températures relativement basses.

Par ailleurs, la réaction est faite dans un milieu basique, voire très basique.

Ainsi le milieu réactionnel doit être à un pH d'au moins 10, de préférence d'au moins 12, et plus particulièrement d'au moins 13,5.

Si nécessaire, pour atteindre les valeurs de pH souhaitées, on peut ajouter au milieu réactionnel une base minérale ou organique telle que des hydroxydes alcalins ou alcalinoterreux comme NaOH ou KOH, des sels ou hydrates d'ammonium quaternaire ou des amines.

Par ailleurs, on peut effectuer la réaction dans un milieu présentant une concentration en titane comprise entre 0,1 et 1 mole de titane par kg de milieu réactionnel.

La concentration en cation divalent ou trivalent dans ce même milieu peut être comprise entre 0,2 et 2 mole par kg de milieu réactionnel.

On notera qu'il s'agit là de concentrations en réactif élevées par rapport à celles utilisées dans l'art antérieur.

Enfin, il est préférable de travailler dans une atmosphère inerte, exempte de $CO_2$ tel que sous azote ou argon.

Le procédé est mis en oeuvre avec un ordre d'introduction des réactifs et d'une manière quelconques. Puis on porte le mélange ainsi obtenu à la température nécessaire. Le mélange est généralement agité.

On maintient ensuite le mélange à la température pendant une durée comprise entre environ 10 et 240 mn.

A l'issue de la réaction, on obtient une poudre qui est filtrée et, si nécessaire, lavée par exemple avec une solution tamponnée à pH 4,8, puis enfin séchée à une température modérée par exemple à une température comprise entre l'ambiante et 50°C, ou par un procédé de type atomisation.

D'une manière générale, le procédé de l'invention permet d'obtenir un produit constitué de particules généralement sphériques de taille d'au plus 0,5μm, en particulier égale ou inférieure à 0,15μm et pouvant descendre jusqu'à 0,025μm.

Ces particules ont une répartition granulométrique très étroite par exemple $\varnothing\,75\,/\,\varnothing\,25 \leq 1,5$ et plus particulièrement $\leq 1,3$.

Leur surface spécifique mesurée par BET varie entre 1 et 25 m2/g.

Ces particules ne présentent pas ou peu de porosité. Elles sont très facilement dispersibles. Leur taux de cristallisation est supérieure à 95%.

Les poudres de titanate obtenues par le procédé de l'invention ont une aptitude au frittage élevée, (au moins 95% de la densité théorique à partir de 1200°C) sans broyage, ni calcination préalable. Ceci permet bien sur des économies importantes sur l'ensemble du procédé d'élaboration du matériau.

Des modes de réalisation particuliers de l'invention peuvent être envisagés.

Une première variante va être décrite ci-dessous. Cette variante permet d'obtenir des produits dont la taille se situe dans la partie haute de la gamme donnée ci-dessus, à savoir entre 0,15 et 0,5μm.

Selon cette variante, on effectue la réaction en deux étapes.

La première étape est conduite dans des conditions telles que le rapport molaire cation divalent ou trivalent/Ti soit inférieur à 1 et de préférence d'au plus 0,5, par exemple entre 0,2 et 0,5. Puis dans une deuxième étape, on rajoute la quantité nécessaire complémentaire de cation divalent ou trivalent.

Il est préférable dans le cas de cette variante d'effectuer les deux étapes à des températures différentes. On travaille à une température basse dans la première étape et à une température plus élevée dans la seconde.

On procède ensuite pour la récupération de la poudre de la même manière que celle décrite plus haut.

Une seconde variante peut aussi être mise en oeuvre plus particulièrement dans le cas où l'on cherche à obtenir des particules sans porosité.

Cette variante consiste à effectuer la réaction en au moins deux étapes à des températures différentes, celle de la première étape étant plus faible que celle de la dernière. Par exemple la première étape peut se dérouler à une température comprise entre 50 et 100°C, la dernière étape pouvant avoir lieu entre 150 et 200°C.

Il est aussi possible de prévoir une étape intermédiaire entre la première et la dernière de façon que la montée en température soit plus progressive, cette étape intermédiaire se déroulant alors à une température comprise entre celles des deux autres.

Des exemples concrets vont maintenant être donnés.

Les exemples 1 à 3 sont des exemples comparatifs. Ils permettent de montrer l'influence de la nature du précurseur sur le titanate final obtenu. Les exemples 4 à 11 sont selon l'invention.

## EXEMPLE COMPARATIF 1

Dans un autoclave de 1 litre, en atmosphère inerte, ont été introduits 509 g d'une suspension d'oxyde de titane hydraté (1,9% TiO$_2$) obtenue par neutralisation à l'ammoniaque d'une solution d'oxychlorure de titane et amorphe aux rayons X, 77,6 g de Ba(OH)$_2$. 8 H$_2$O et 142 g d'eau décarbonatée. Le mélange a été maintenu à 100°C sous agitation (350 t.mn$^{-1}$) pendant 4 heures. On a obtenu après lavage par une solution tamponnée à pH = 4,8 une poudre constituée de BaTiO$_3$ (phase cubique) avec un rendement de 97%. Les particules sont agrégées et polydisperses, avec une répartition de tailles comprise entre 0,07 et 0,2µm.

## EXEMPLE COMPARATIF 2

Dans les mêmes conditions de concentration en titane et baryum et de température notamment que celles de l'exemple 1, on a fait réagir une suspension d'oxyde de titane hydraté préparée par l'hydrolyse d'isopropanolate de titane, amorphe aux rayons X, et constitué de particules sphériques de 1,2µm de diamètre. On a obtenu BatiO$_3$ fortement polydisperse, dont la taille des particules varie entre 0,07 et 0,5µm. Le diamètre moyen mesuré par granulométrie Brookhaven DCP-1000 est de 0,3µm avec $\phi$ 75/$\phi$ 25 égal à 1,86.

## EXEMPLE COMPARATIF 3

Dans les mêmes conditions de concentration en titane et baryum et de température notamment que celles de l'exemple 1, on a fait réagir une suspension d'oxyde de titane de structure cristallographique rutile préparé par thermohydrolyse de TiOCl$_2$ et se présentant sous la forme d'aiguilles agrégées de 0,20µm par 0,007µm. Après 4 heures de réaction, le rendement de formation de BaTiO$_3$ n'était que de 25% et les particules obtenues étaient polydisperses, de taille variant entre 0,5 et 1,5µm.

## EXEMPLE 4

On prépare un sol d'oxyde de titane (à 16% de TiO$_2$) de structure anatase par le procédé suivant :

A un litre de solution d'oxychlorure de titane contenant une mole de Ti, on ajoute 0,02 mole d'acide citrique. On ajoute également à cette solution des germes d'anatase à raison de 2% en poids par rapport au TiO$_2$ total. L'ensemble est porté à ébullition et y est maintenu pendant 6 heures. A la fin de la réaction, ce sol se présente sous la forme de particules de 30 nm de diamètre constituées de cristallites de 7 nm. On le fait ensuite réagir dans les mêmes conditions de concentration en titane et baryum et de température notamment que celles de l'exemple 1. On a obtenu ainsi BaTiO$_3$, avec un rendement d'au moins 95%. Les particules sont sphériques, non agrégées, de taille moyenne égale à 0,07µm et monodisperses ($\phi$ 75/$\phi$ 25 = 1,33).

## EXEMPLE 5

L'autoclavage d'hydroxyde de baryum avec le sol d'anatase tel que celui décrit à l'exemple 4 pendant 4 heures à 120°C avec une concentration en titane de 0,17 mole/kg et un rapport molaire Ba/Ti égal à 1,25 a conduit à une poudre de BaTiO$_3$ monodisperse et de diamètre moyen des particules d'aspect sphérique égal à 0,125µm ($\phi$ 75/$\phi$ 25 = 1,30) avec un rendement de 93%.

## EXEMPLE 6

L'autoclavage d'hydroxyde de baryum avec le sol d'anatase décrit à l'exemple 4, réalisé pendant 4 heures à 120°C avec une concentration en titane de 0,60 mole/kg et un rapport Ba/Ti égal à 1,5 a permis d'obtenir une poudre de BaTiO$_3$ monodisperse dont le diamètre moyen des particules d'aspect sphérique est de 0,025 μm ($\phi$ 75/$\phi$ 25 = 1,25).

## EXEMPLE 7

L'autoclavage effectué selon les conditions de concentrations de l'exemple 5, en présence d'hydroxyde de tétraéthylammonium (0,42 mole/kg) et à une température de 70°C a permis d'obtenir BaTiO$_3$ avec un rendement de 95% après 4 heures de réaction. Les particules formées sont sphériques, monodisperses et d'un diamètre de 0,060μm ($\phi$ 75/$\phi$ 25 = 1,24).

## EXEMPLE 8

Un mélange constitué du sol d'anatase décrit à l'exemple 4 et d'hydroxyde de baryum, tel que la concentration en titane soit de 0,4 mole/kg et le rapport molaire Ba/Ti égal à 1,25, a été autoclavé à 70°C (1 heure), puis à 100°C (1 heure) et enfin à 180°C (2 heures). On a obtenu de cette manière des particules de BaTiO$_3$ de morphologie sphérique et non poreuses. Le diamètre moyen, mesuré par granulomètre BROOKHAVEN DCP-1000 est de 0,075μm et $\varnothing$75 / $\varnothing$25 = 1,26.

Leur surface spécifique mesurée à l'azote est de 13 m2/g. Le rapport cation divalent/Ti vaut 0,990. La poudre non calcinée, ni broyée, a présenté une densité de 96,5% de la densité théorique après un frittage à 1300°C (2 heures).

## EXEMPLE 9

364 g d'un mélange de sol d'anatase décrit à l'exemple 4 et d'hydroxyde de baryum, tel que la concentration en titane soit de 0,6 mole/kg et le rapport molaire Ba/Ti égal à 0,33, ont été portés à 80°C, sous agitation, pendant 30 mn. Une solution d'hydroxyde de baryum (2 mole/kg, 364 g) y a ensuite été ajoutée, puis le mélange a été porté à 100°C (30 mn) puis à 180°C pendant 2 heures. Il en a résulté des particules de BaTiO$_3$ sphériques, monodisperses et d'unetaille moyenne de 0,150μm ($\phi$ 75/$\phi$ 25 = 1,35).

## EXEMPLE 10

Une suspension constituée d'oxyde de titane anatase tel que celui décrit à l'exemple 4, à la concentration de 0,17 M/kg et d'hydroxyde de strontium à la concentration de 0,21 M/kg a été portée à 80°C pendant 4 heures. Après lavage, on a obtenu une poudre de SrTiO$_3$ monodisperse dont le diamètre moyen des particules est égal à 0,035μm.

## EXEMPLE 11

Une suspension constituée d'oxyde de titane anatase tel que celui décrit à l'exemple 4, à la concentration de 0,17 M/kg et d'hydroxyde de calcium, à la concentration de 0,5 M/kg et dont le pH a été ajusté à 13,5 par NaOH a été portée à 150°C pendant 4 heures. Après lavage, on a obtenu une poudre de CaTiO$_3$ constituée de particules parallélépipédiques de 0,45 x 0,1 x 0,1μm.

## EXEMPLE 12

L'autoclavage d'hydroxyde de baryum, d'hydroxyde de strontium avec le sol d'anatase tel que décrit à l'exemple 4, est réalisé pendant 4 heures à 120°C avec une concentration en titane de 0,17 M/kg et des rapports Ba/Sr = 1 et (Ba+Sr)/Ti = 1, et en présence de soude (0,66 M/kg).

Le produit résultant, lavé avec une solution tamponnée à un pH de 4,8, est constitué d'une poudre de Ba$_{0,5}$Sr$_{0,5}$TiO$_3$.

Les particules ont une morphologie sphérique, de taille moyenne 0,035μm et monodisperses ($\varnothing_{75}$/$\varnothing_{25}$ = 1,35).

## EXEMPLE 13

L'autoclavage d'hydroxyde de baryum, d'hydroxyde de strontium avec le sol d'anatase tel que décrit à l'exemple 4, est réalisé pendant 4 heures à 120°C avec une concentration en titane de 0,17 M/kg et des rapports Ba/Sr = 0,25 et (Ba+Sr)/Ti = 1, et en présence de Soude (0,66 M/kg).

Le produit résultant, lavé avec une solution tamponnée à un pH de 4,8, est constitué d'une poudre de Ba$_{0,2}$Sr$_{0,8}$TiO$_3$.

Les particules ont une morphologie sphérique, de taille moyenne 0,030μm et monodisperses ($\varnothing_{75}$/$\varnothing_{25}$ = 1,5).

## EXEMPLE 14

L'autoclavage d'hydroxyde de baryum, d'hydroxyde de strontium avec le sol d'anatase tel que décrit à l'exemple 4, est réalisé pendant 4 heures à 120°C avec une concentration en titane de 0,17 M/kg et des rapports Ba/Sr = 4 et (Ba+Sr)/Ti = 1, et en présence de Soude (0,66 M/kg).

Le produit résultant, lavé avec une solution tamponnée à un pH de 4,8, est constitué d'une poudre de Ba$_{0,8}$Sr$_{0,2}$TiO$_3$.

Les particules ont une morphologie sphérique, de taille moyenne 0,027μm et monodisperses ($\varnothing_{75}$/$\varnothing_{25}$ = 1,25).

## Revendications

1 - Procédé de préparation d'un titanate d'au moins un cation divalent, ou trivalent caractérisé en ce qu'on fait réagir au moins un sel ou hydroxyde dudit cation en milieu basique avec un sol d'oxyde de titane de structure anatase obtenu par un procédé comprenant une thermohydrolyse.

2 - Procédé selon la revendication 1, caractérisé en ce qu'on choisit le cation divalent dans le groupe des cations alcalino-terreux.

3 - Procédé selon la revendication 2, caractérisé en ce que le cation est le baryum ou le strontium

4 - Procédé selon l'une des revendications précédentes, caractérisé en ce qu'on choisit le cation trivalent dans le groupe comprenant le bismuth, l'yttrium et les terres rares.

5 - Procédé selon l'une des revendications précédentes, caractérisé en ce que le sol précité est le produit d'une thermohydrolyse d'un composé A du titane dans un milieu comprenant au moins un composé B choisi parmi :

(i) les acides qui présentent :
  – soit un groupement carboxyle et au moins deux groupements hydroxyles et/ou amines
  – soit au moins deux groupements carboxyles et au moins un groupement hydroxyle et/ou amine

(ii) les sels des acides cités sous (i).

6 - Procédé selon la revendication 5, caractérisé en ce que le composé A est un halogénure, un oxyhalogénure, un nitrate ou un alcoxyde de titane.

7 - Procédé selon l'une des revendications précédentes, caractérisé en ce qu'on effectue la réaction précitée à une température d'au moins 50°C plus particulièrement comprise entre 70 et 180°C.

8 - Procédé selon la revendication 7, caractérisé en ce qu'on effectue la réaction précitée à une température comprise entre 70 et 120°C.

9 - Procédé selon l'une des revendications précédentes, caractérisé en ce qu'on effectue la réaction précitée dans un milieu à pH d'au moins 10, de préférence d'au moins 12, plus particulièrement d'au moins 13,5.

10 - Procédé selon l'une des revendications précédentes, caractérisé en ce qu'on effectue la réaction précitée dans un milieu comprenant une base.

11 - Procédé selon l'une des revendications précédentes, caractérisé en ce qu'on effectue la réaction précitée dans un milieu présentant une concentration en Ti comprise entre 0,1 et 1 M/kg.

12 - Procédé selon l'une des revendications précédentes, caractérisé en ce qu'on effectue la réaction précitée dans un milieu présentant une concentration en cation divalent comprise entre 0,2 et 2 M/kg.

13 - Procédé selon l'une des revendications précédentes, caractérisé en ce qu'on effectue la réaction précitée en au moins deux étapes à des températures différentes, la température étant plus élevée dans la dernière étape.

14 - Procédé selon l'une des revendications précédentes, caractérisé en ce qu'on effectue la réaction précitée en deux étapes, la première étape étant conduite dans des conditions telles que l'on ait un rapport molaire cation divalent/Ti inférieur à 1, le complément de cation divalent étant ensuite introduit dans la seconde étape.

15 - Procédé selon la revendication 14, caractérisé en ce qu'on effectue les deux étapes précitées à des températures différentes, la température étant plus élevée dans la seconde étape.

Office européen
des brevets

# RAPPORT DE RECHERCHE EUROPEENNE

Numero de la demande

EP 91 40 0643

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 335 773 (RHONE-POULENC CHIMIE) <br> * En entier * <br> --- | 1-3,5,6 | C 01 G 23/00 <br> C 01 G 29/00 |
| A | CHEMICAL ABSTRACTS, vol. 105, no. 22, décembre 1986, page 166, résumé no. 193881f, Columbus, Ohio, US; & JP-A-61 91 016 (SONY CORP.) 09-05-1986 <br> * Résumé en entier * <br> --- | 1-3,7-10 | |
| A | EP-A-0 187 383 (SONY CORP.) <br> * Page 24, revendications 1-2 * <br> --- | 1,4,7-10 | |
| A | EP-A-0 193 460 (RHONE-POULENC SPECIALITES CHIMIQUES) <br> --- | | |
| A | FR-A-2 601 352 (CABOT CORP.) <br> ----- | | |

DOMAINES TECHNIQUES RECHERCHES (Int. Cl.5)

C 01 G

Le présent rapport a été établi pour toutes les revendications

| Lieu de la recherche | Date d'achèvement de la recherche | Examinateur |
|---|---|---|
| LA HAYE | 18-06-1991 | LIBBERECHT-VERBEECK E.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................................................
& : membre de la même famille, document correspondant

EPO FORM 1503 03.82 (P0402)